# EUROPEAN PATENT APPLICATION

(11) **EP 1 632 900 A2**
(43) Date of publication of application: **08.03.2006**
(21) Application number: 05255220.5
(22) Date of filing: 25.08.2005
(51) Int. Cl.: G06T 5/00

(54) **Method and apparatus for locating and extracting captions in a digital image**

(30) Priority: 26.08.2004 US 604574; 13.05.2005 US 128971
(71) Applicant: SEIKO EPSON CORPORATION, Shinjuku-ku, Tokyo 163-0811 (JP)
(72) Inventor: Zhou, Hui, Toronto, Ontario M2J 1M5 (CA)
(74) Representative: Cloughley, Peter Andrew

(57) **Abstract**

A method of locating captions in a digital image comprises detecting edge information in the digital image to generate an edge image and performing erosion and dilation operations on the edge image to identify one or more candidate caption containing regions in the edge image. For at least one detected candidate caption containing region, the portion of the digital image corresponding to at least one candidate caption conatining region is processed to locate the captions therein.

## Description

### Cross-Reference to Related Applications

The present application claims the benefit of U.S. Provisional Patent Application No. 60/604,574 filed on August 26, 2004.

### Field of the Invention

The present invention relates generally to image processing and in particular, to a method and apparatus for locating and extracting captions in a digital image.

### Background of the Invention

Digital video is an important and widely used medium. Unfortunately digital video data is typically unstructured and aside from pixel data, often provides no additional information concerning the content of the video. This of course makes effective and efficient retrieval of stored digital video very difficult.

Manually annotating digital video to facilitate digital video retrieval has been considered. This however is a very time consuming and difficult task making it economically impractical.

In some instances digital video frames and images include captions, subtitles and/or other textual information. Many attempts have been made to locate and extract such textual information from digital video frames and images.

For example, U.S. Patent No. 6,101,274 to Pizano et al. discloses a method and apparatus for detecting and interpreting textual captions in digital video signals. Edges in a digital video frame are detected using a modified Sobel edge detector and the edge image is subsequently binarized. The binarized edge image is then compressed to reduce the amount of data to be processed and to highlight the edges therein. A determination is then made as to whether groups of connected pixels in the edge image are likely to be part of a text region by employing temporal redundant characteristics of captions, and information concerning the approximate locations of the captions within the digital video frame.

U.S. Patent No. 6,470,094 to Lienhart el al. discloses a method for locating text in digital images that exploits the temporal redundancy of text through multiple frames of digital video. During the method, a source image is converted into several images of varying resolutions and edges are detected in respective ones of the images. A comparison of the detected edges across the multiple images allows edges to be identified reliably. Once the edges are identified, color difference histograms are used to determine actual text in the source image as well as background colors.

U.S. Patent No. 6,501,856 to Kuwano et al. discloses a method for detecting characters in video frames wherein edge pairs in the video frames are detected. Characters in the video frames are then determined from a spatial distribution of prescribed feature points.

U.S. Patent No. 6,614,930 to Agnihotri et al. discloses a method and system for classifying symbols in a video stream. A connected-component technique for isolating symbol regions identified using an edge detection filter is employed. The input image is grey-scaled and filtered to remove high frequencies. Edges in the filtered image are then detected using an adaptive threshold edge filter. Adjacent edge pixels are then grouped, and a series of morphological processes are employed to connect identified portions of actual symbols.

U.S. Patent No. 6,115,497 to Vaezi et al. discloses a method and apparatus for character recognition in an image. A decision tree structure, which classifies connected components established by contour tracing as either text or non-text, is employed. The connected components are further classified in terms of size and location to other connected components.

U.S. Patent No. 6,243,419 to Satou et al. discloses a method for detecting captions in video data that employs predictive coding and motion compensation, without decoding the image into individual frames. The caption detection and extraction is based on interframe correlation between image elements.

U.S. Patent Application Publication No. US 2003/0035580 to Wang et al. also discloses a method and device for locating characters in digital camera images. A filter is used to remove noise from an input image and the color space of the input image is normalized. Connected components are then determined by analyzing binary layers of the normalized color image. Oversized components are discarded as not being characters. Numerous heuristics for reducing false alarms, including tests of color contrast and horizontal or vertical alignment of connected components are employed.

Although the above references disclose detection of captions and/or other textual information in digital video frames or images, improved methods for locating captions in digital video frames and images to enable located captions to be extracted are desired.

It is therefore an object of the present invention to provide a novel method and apparatus for locating and extracting captions in a digital image.

### Summary of the Invention

Accordingly, in one aspect there is provided a method of locating captions in digital image comprising:
detecting edge information in said digital image and generating an edge image;
performing erosion and dilation operations on said edge image and identifying one or more candidate caption containing regions in said edge image; and
for at least one detected candidate caption containing region, processing the portion of said digital image corresponding to said at least one candidate caption containing region to locate captions therein.

In one embodiment, the method further comprises extracting the located captions and generating an output image including the extracted captions. The digital image can either be a grey-scale image or a color image that is converted into a grey-scale image. Prior to performing the erosion and dilation operations, the edge image is blurred and thresholded using the average intensity of the blurred edge image as a threshold value.

During the processing, the portion of the digital image corresponding to the at least one candidate caption containing regions is thresholded to detect pixel components therein potentially representing caption characters. The detected pixel components are subjected to at least one test to verify the detected pixel components as caption characters. During the subjecting, aligned pixel components are determined. Pixel components outside of a specified size range and pixel components intersecting the boundary of the at least one candidate caption containing region are deemed not to represent caption characters and are discarded.

According to another aspect there is provided a method of detecting captions in a digital image comprising:
detecting edge information in said digital image and generating an edge image;
performing morphological operations on said edge image to identify candidate caption containing regions in said edge image;
examining portions of said digital image corresponding to at least one of said candidate caption containing regions to detect pixel components therein potentially representing caption characters; and
subjecting detected pixel components to a plurality of tests to verify those pixel components as representing said caption characters.

According to yet another aspect there is provided an apparatus for locating captions in a digital image comprising:
an edge detector generating an edge image including edges identified in the digital image;
a morphological operator acting on the edge image and identifying one or more candidate caption containing regions in the edge image; and
a caption locator processing the portion of the digital image corresponding to at least one identified caption containing region to locate captions therein.

The caption locator extracts the located captions and generates an output image including the extracted captions. The caption locator also thresholds the portion of the digital image to detect pixel components therein potentially representing caption characters. The pixel components are subjected to at least one test to verify the detected pixel components as caption characters. In one embodiment, the caption locator determines aligned pixel components, discards pixel components having a size outside of a specified size range and discards pixel components intersecting the boundary of the candidate caption containing region.

According to still yet another aspect there is provided a computer readable medium including a computer program for locating captions in a digital image, said computer program comprising:
computer program code for detecting edge information in said digital image and generating an edge image;
computer program code for performing erosion and dilation operations on said edge image and identifying one or more candidate caption containing regions in said edge image; and
for at least one detected candidate caption containing region, computer program code for processing the portion of said digital image corresponding to said at least one candidate caption containing regions to locate captions therein.

According to still yet another aspect there is provided a A computer readable medium including a computer program for detecting captions in a digital image, said computer program comprising:
computer program code for detecting edge information in said digital image to generate an edge image;
computer program code for performing morphological operations on said edge image to identify candidate caption containing regions in said image;
computer program code for examining portions of said digital image corresponding to at least some of said candidate caption containing regions to detect pixel components therein potentially containing caption characters; and
computer program code for subjecting detected pixel components to a plurality of tests to verify those pixel components representing said caption characters.

The method and apparatus for locating captions in a digital image allows captions to be detected and extracted. The extracted captions can then be used to annotate or otherwise label the digital image, thus providing information concerning the digital image content. This of course allows stored digital images or video to be efficiently and effectively retrieved. By using edge and connectivity information to locate captions in the digital image, captions in the digital image can be located quickly and accurately.

### Brief Description of the Drawings

Embodiments of the present invention will now be described by way of further example only and with reference to the accompanying drawings, in which:-
Figure 1 is a flowchart of a method for locating and extracting captions in a digital image;
Figure 2 is a flowchart showing the steps performed during digital image preprocessing;
Figure 3 is a flowchart showing the steps performed during candidate caption containing region detection;
Figure 4 is a flowchart showing the steps performed during processing of portions of a grey-scale image to detect and extract captions;
Figure 5 is an exemplary digital image including captions; and
Figures 6 to 16 show transformation of the digital image of Figure 5 at various stages during caption detection and extraction.

### Detailed Description of the Embodiments

In the following description, an embodiment of a method, apparatus and computer program for locating and extracting captions in a digital image is provided. The digital image may be a video frame forming part of a digital video sequence or stream, or may be a still image. Within the context of this application, "captions" refer to any textual information that may appear in a digital image such as for example closed-captioning text, subtitles and/or other textual information.

The method, apparatus and computer program may be embodied in a software application written in Visual Basic, C⁺⁺, Java or the like including computer executable instructions executed by a processing unit such as a personal computer, server or other computer system environment. The software application may run as a stand-alone digital image editing tool or may be incorporated into other digital imaging applications to provide enhanced functionality to those digital image editing applications. The software application may include program modules comprising routines, programs, object components, data structures etc., embodied as computer readable program code stored on a computer readable medium. The computer readable medium is any data storage device that can store data, which can thereafter be read by a computer system. Examples of computer readable medium include for example, read only memory, random access memory, CD-ROMS, magnetic tape and optical data storage devices. The computer readable program code can also be distributed over a network including coupled computer systems so that the computer readable program code is stored and executed in a distributed fashion.

In this example, the captions to be detected and extracted from input digital images are subtitles mainly composed of Japanese Kanji, hiragana and Katakana ideographic characters applied to or superimposed on digital video frames. It is assumed that the characters of the captions are light in color and overlay a dark border that is in high contrast to the characters. It is also assumed that the characters are generally aligned either horizontally or vertically in the digital video frames and that the characters are of similar size and of a size that falls within a specified range.

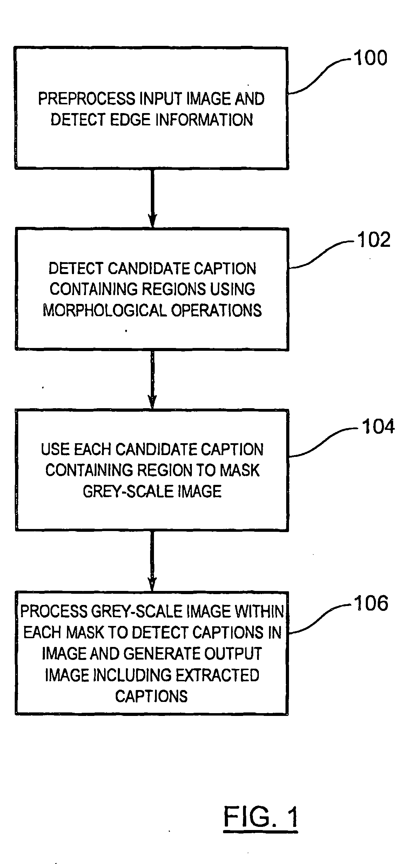

Turning now to Figure 1, the general steps performed to locate and extract captions in an input digital image is shown. Initially the input digital image is preprocessed and edge information in the preprocessed digital image is detected (step 100). Candidate caption containing regions in the edge image are then determined using morphological operations (step 102). Each candidate caption containing region is then used to mask the grey-scale input digital image (step 104). The portions of the grey-scale input digital image within each mask are processed to detect captions in the digital image (step 106) and the detected captions are extracted thereby to generate an output image including the extracted captions.

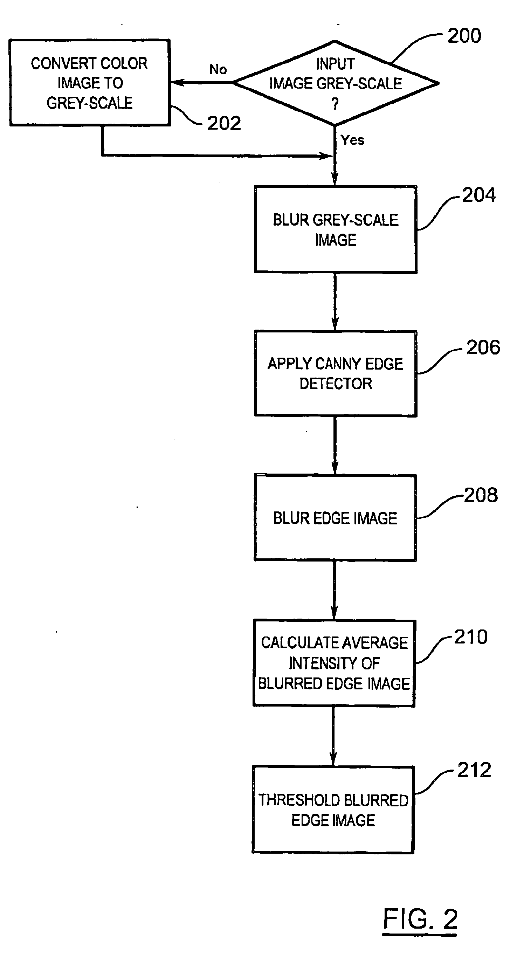

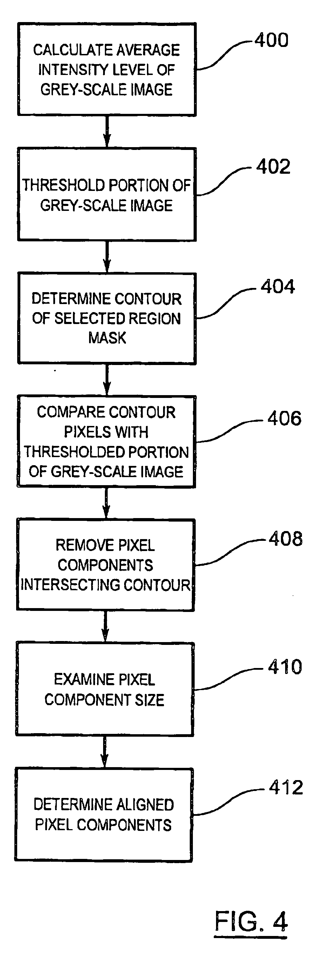

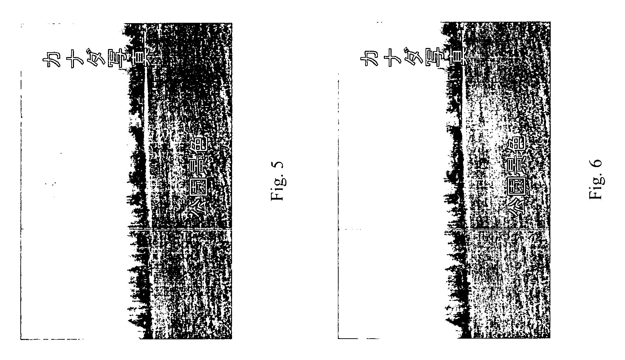

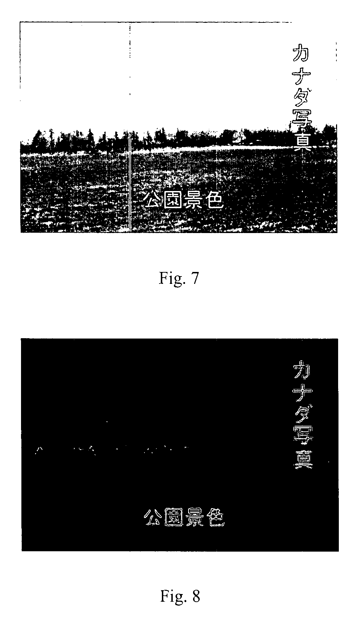

Further specifics of the above method will now be described with reference to Figures 2 to 4. For ease of understanding, reference to Figures 5 to 16, which show transformation of an input digital image (see Figure 5) at various stages during performance of the method will also be made. During preprocessing at step 100, the input digital image is examined to determine if the input digital image is in color or is a grey-scale image (see step 200 in Figure 2). If the input digital image is a grey-scale image it is considered to be ready for further processing. If the input digital image is in color as shown in Figure 5, the input digital image is converted to a 256 grey-scale image (step 202 and Figure 6) to place it into a form ready for further processing. The grey-scale image is then blurred using a 2x2 box filter (step 204 and Figure 7). A Canny edge detector is applied to the blurred grey-scale image to yield an edge image that includes detected edges in the blurred grey-scale image (step 206 and Figure 8).

As is known, the Canny edge detector works in multiple stages. The blurred grey-scale image is initially smoothed and then a two-dimensional operator is applied to the smoothed image to highlight regions of the image with high first spatial derivatives. Edges in the image give rise to ridges in the gradient magnitude image. The ridges are tracked and all pixels that are not on the ridges are set to zero to yield thin lines representing the edges.

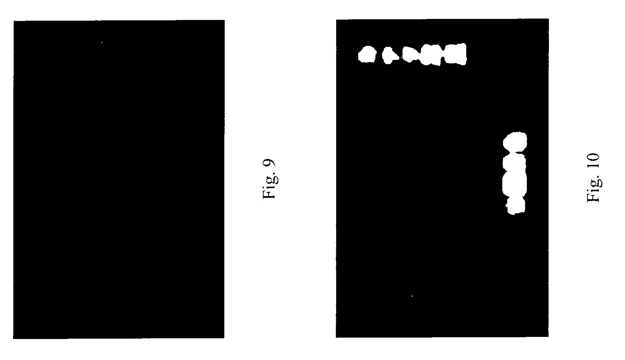

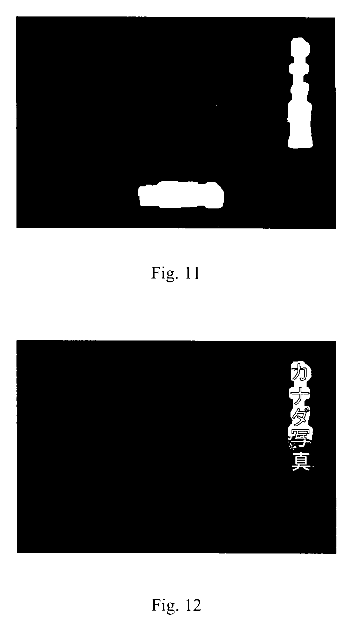

The edge image is then blurred using a 10x10 box filter (step 208 and Figure 9). The average intensity of the blurred edge image is calculated (step 210) and the blurred edge image is thresholded using the calculated average intensity value as the threshold (step 212 and Figure 10). During threshholding, pixels of the blurred edge image having values above the threshold are set to white and pixels having values below the threshold are set to black.

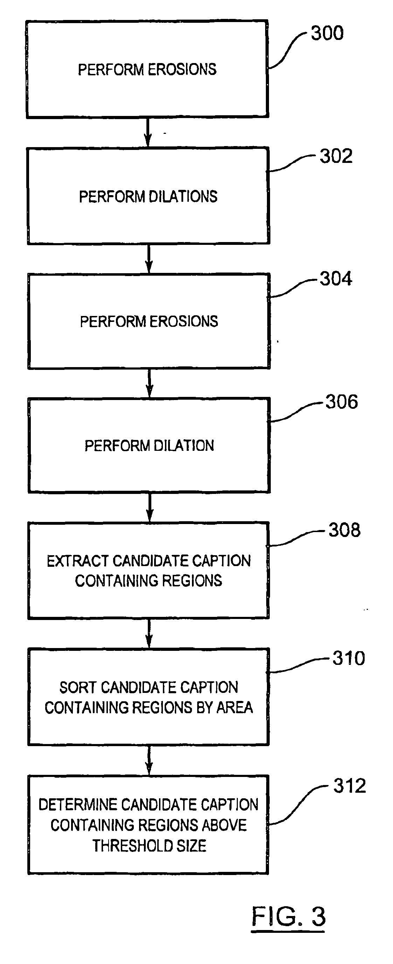

At step 102, a number of morphological operations are applied to the thresholded blurred edge image to fill in regions of white pixels representing candidate caption containing regions. In particular, a 3x3 erosion operation (step 300 in Figure 3) followed sequentially by ten (10) 3x3 dilations (step 302), seven (7) 3x3 erosions (step 304) and then one (1) 3x3 dilation (step 306) are performed. With the morphological operations completed, the resultant image (see Figure 11) is examined to determine the white pixels forming candidate caption containing regions (step 308). During this process, each white pixel in a candidate caption containing region is examined to determine if a predetermined number of adjacent pixels have the same value. If so the pixel is deemed to be part of the candidate caption containing region. In this example, each pixel is examined to determine if the four (4) non-diagonal adjacent pixels have the same value. Once the pixels of each candidate caption containing region have been determined, the candidate caption containing regions are extracted. The extracted candidate caption containing regions are then sorted based on area (step 310) and the candidate caption containing regions that are larger than a threshold size are determined (step 312). If no candidate caption containing regions are larger than the threshold size, the method is terminated as the input digital image is deemed not to include any captions.

At step 104 with the extracted candidate caption containing regions sorted and the candidate caption containing regions above the threshold size determined, the largest candidate caption containing region having a size larger than the threshold is initially selected and is used to define a region mask. The region mask is then applied to the grey-scale image of Figure 6 to identify the portion of the grey-scale image corresponding to the region mask (see Figure 12).

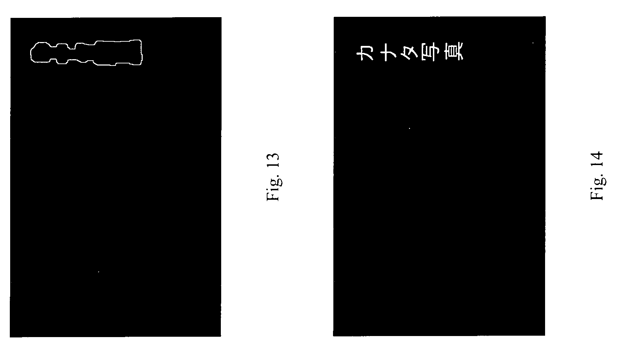

At step 106, the average intensity level of the grey-scale image of Figure 6 is calculated (step 400) and is used to threshold the portion of the grey-scale image corresponding to the region mask (step 402). During threshholding, pixels of the grey-scale image portion having values above the threshold i.e. pixels forming candidate caption characters, are set to white and pixels having values below the threshold are set to black. Contour detection is then applied to the resultant image of Figure 11, which identifies the candidate caption containing regions, to determine the contour of the selected region mask (step 404 and Figure 13).

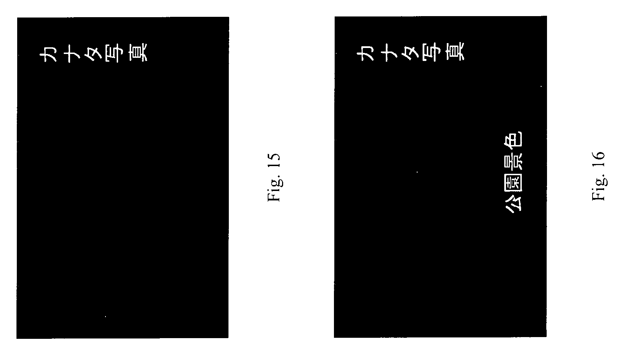

During contour detection, each pixel of the selected candidate caption containing region is examined to determine if any of its four non-diagonal adjacent pixels is black. If so, the pixel is deemed to be part of the contour of the candidate caption containing region and is labeled as a contour pixel. The image of Figure 12 including the thresholded portion of the grey-scale image corresponding to the region mask is then compared to the determined contour pixels (step 406). White pixel components of the thresholded portion that intersect with the contour pixels are removed (step 408 and Figure 14). The size of each white pixel component of the thresholded portion is then examined to determine if the white pixel component falls within a specified size range (step 410). In this example, each white pixel component is checked to see if it is larger than 8x8 pixels and smaller than 80x80 pixels. Any white pixel component that does not fall within the size range is discarded. For the remaining white pixel components that fall within the specified size range, the white pixel components are examined to determine if they can be generally aligned with a horizontal or vertical line (step 412). The white pixel components that can be aligned are deemed to be caption characters and are extracted (see Figure 15). Any white pixel component that does not align with the other white pixel components is discarded.

To determine if the white pixel components are aligned, the location of the centers of the white pixel components are determined and the center locations are compared. If the white pixel components are horizontally aligned, the x-coordinate values of the white pixel components will be generally the same. If the white pixel components are vertically aligned, the y-coordinate values of the white pixel components will be generally the same. White pixel components having x-coordinate or y-coordinate values, depending on whether the white pixel components are horizontally or vertically aligned, that vary significantly from the aligned coordinate values are discarded.

With the caption characters in the selected candidate caption containing region determined, the next candidate caption containing region having a size greater than the threshold is selected and above steps are reperformed. The end result is an output image including the extracted captions (see Figure 16). These steps are performed until either no candidate caption containing regions remain, no candidate caption containing regions larger than the threshold remain or a maximum number of candidate caption containing regions have been processed. In this example, a maximum of eight (8) candidate caption containing regions are processed.

The example described above shows the detection and extraction of Japanese ideographic characters from a digital image frame. Those of skill in the art will however appreciate that caption characters in other languages can be located and extracted. The pixel component size criteria can be adjusted and the pixel component alignment test can be omitted depending on the type of textural information that is to be located and extracted from the images being processed. Different morphological operations can of course be employed to fill in candidate caption containing regions.

Although embodiments have been described, those of skill in the art will appreciate that the variations and modifications may be made without departing from the spirit and scope of the invention defined by the appended claims.

## Claims

1. A method of locating captions in a digital image comprising:
detecting edge information in said digital image and generating an edge image;
performing erosion and dilation operations on said edge image and identifying one or more candidate caption containing regions in said edge image; and
for at least said detected candidate caption containing region, processing the portion of said digital image corresponding to said one or more candidate caption containing regions to locate captions therein.

2. The method of claim 1 further comprising extracting the located captions and generating an output image including the extracted captions.

3. The method of claim 2 wherein said digital image is a grey-scale image, said method further comprising prior to said performing, firstly blurring and then threshholding said edge image.

4. The method of claim 3 wherein the blurred edge image is thresholded using the average intensity of said blurred edge image as a threshold value.

5. The method of claim 4 further comprising prior to said edge information detecting, blurring said grey-scale image.

6. The method of claim 5 wherein said edge information detecting is performed using a Canny edge detector.

7. The method of claim 2 wherein portions of said digital image corresponding to candidate caption containing regions that are above a threshold size are processed.

8. The method of claim 7 wherein the portions of said digital image are processed in an order based on an attribute of said candidate caption containing regions.

9. The method of claim 8 wherein said attribute is size.

10. The method of claim 2 wherein during processing of the portion of said digital image, pixel components of the digital image portion potentially representing caption characters that touch the border of said candidate caption containing region are discarded.

11. The method of claim 10 wherein the contour of the candidate caption containing region is determined prior to determining if pixel components of the digital image portion touch the border of the candidate caption containing region.

12. The method of claim 10 wherein said pixel components are determined by threshholding the digital image portion using the average intensity of said digital image as the threshold value.

13. The method of claim 12 wherein during processing, the pixel components are compared to determine aligned pixel components.

14. The method of claim 13 wherein during processing, the pixel components are examined to determine if said pixel components fall within a specified size range, pixel components outside of said range being discarded.

15. The method of claim 2 wherein said processing comprises threshholding the portion of said digital image to detect pixel components therein potentially representing caption characters and subjecting the detected pixel components to at least one test to verify detected pixel components as caption characters.

16. The method of claim 15 wherein during said subjecting, aligned pixel components are determined.

17. The method of claim 16 wherein during said subjecting, pixel components outside of a specified size range are discarded.

18. The method of claim 17 wherein during said subjecting, pixel components intersecting the boundary of the candidate caption containing region are discarded.

19. A method of detecting captions in a digital image comprising:
detecting edge information in said digital image and generating an edge image;
performing morphological operations on said edge image to identify candidate caption containing regions in said edge image;
examining portions of said digital image corresponding to at least one of said candidate caption containing regions to detect pixel components therein potentially representing caption characters; and
subjecting detected pixel components to a plurality of tests to verify those pixel components as representing said caption characters.

20. The method of claim 19 wherein said subjecting comprises determining the contour of candidate caption containing regions and discarding pixel components touching the borders of the candidate caption containing regions.

21. The method of claim 20 wherein said subjecting further comprises determining aligned pixel components.

22. The method of claim 21 wherein said subjecting further comprises discarding pixel components having a size outside of a specified size range.

23. An apparatus for locating captions in a digital image comprising:
an edge detector generating an edge image including edges identified in the digital image;
a morphological operator acting on the edge image and identifying one or more candidate caption containing regions in the edge image; and
a caption locator processing the portion of the digital image corresponding to at least one identified caption containing region to locate captions therein.

24. An apparatus according to claim 23 wherein said caption locator extracts the located captions and generates an output image including the extracted captions.

25. An apparatus according the claim 24 wherein said caption locator thresholds the portion of said digital image to detect pixel components therein potentially representing caption characters and subjects the pixel components to at least one test to verify the detected pixel components as said caption characters.

26. An apparatus according to claim 25 wherein said caption locator determines aligned pixel components.

27. An apparatus according to claim 26 wherein said caption locator discards pixel components having a size outside of a specified size range.

28. An apparatus according to claim 27 wherein said caption locator discards pixel components intersecting the boundary of said candidate caption containing region.
